(19) **Europäisches Patentamt**

**European Patent Office**

**Office européen des brevets**

(11) **EP 1 195 304 B1**

(12) **EUROPEAN PATENT SPECIFICATION**

(45) Date of publication and mention
of the grant of the patent:
**13.04.2005 Bulletin 2005/15**

(51) Int Cl.$^7$: **B60T 8/00**, B60K 41/14

(21) Application number: **01123850.8**

(22) Date of filing: **05.10.2001**

(54) **Overall control system for a posture control apparatus and a continuously variable transmission of a vehicle**

Gesamtsteuerungssystem für eine Fahrdynamikregelung und CVT-Getriebe in einem Kraftfahrzeug

Dispositif globale de contrôle pour un système de réglage de la dynamique de route et une transmission du type CVT pour un véhicule automobile

(84) Designated Contracting States:
**DE ES FR GB IT**

(30) Priority: **05.10.2000 JP 2000306121**

(43) Date of publication of application:
**10.04.2002 Bulletin 2002/15**

(73) Proprietor: **Mazda Motor Corporation
Aki-gun, Hiroshima 735-8670 (JP)**

(72) Inventors:
• **Tsuyama, Toshiaki
Aki-gun, Hiroshima 735-8670 (JP)**

• **Okazaki, Haruki
Aki-gun, Hiroshima 735-8670 (JP)**
• **Sasaki, Hiroshi
Aki-gun, Hiroshima 735-8670 (JP)**

(74) Representative: **Zinnecker, Armin, Dipl.-Ing. et al
Lorenz-Seidler-Gossel,
Widenmayerstrasse 23
80538 München (DE)**

(56) References cited:
**DE-A- 19 844 103        DE-A- 19 944 656
US-A- 5 257 189          US-A- 6 077 190
US-A- 6 123 164**

## Description

## BACKGROUND OF THE INVENTION

The present invention belongs to the field of technologies that control the movement of a vehicle, and relates to an overall control system that controls the posture of a vehicle during cornering with a specific aim of rectifying understeer.

In recent years, vehicles have been fitted with various control systems. These include anti-lock braking systems that achieve favorable braking by controlling the braking force of each wheel during braking and traction control systems that achieve improved starts and acceleration by controlling the engine output and braking forces to avoid wheel spin due to excessive torque being transmitted to the drive wheels. Posture control systems, which utilize the functions of the above systems or operate independently of them, are also being implemented to stabilize the behavior of vehicles during cornering.

On detecting understeer or oversteer during cornering, a posture control system controls the vehicle posture in the yaw direction with the aim of stabilizing the vehicle as it corners. This can be achieved by performing control to reduce the engine output or by controlling the braking force of each wheel. When implementing such a system, however, there is the problem of how the control performed by this system can coexist with the control performed over the gearing of the vehicle. One proposed solution to this problem is the technology disclosed by Japanese Patent JP 10236186. This technology prohibits gear changes by an automatic transmission while posture control is being performed during cornering and so keeps the vehicle in the same gear.

United States Patent 6.077.190 describes a vehicle control apparatus including a running stability controller for improving the stability of running of the vehicle by reducing engine output, braking the vehicle and controlling the automatic transmission. This device prevents drawbacks due to interferences or inadequate coordination between the control of the automatic transmission and the control performed on other devices of the power transmitting system, e.g. the engine or the brakes of the vehicle.

Another related technology is disclosed by Japanese patent JP 11044359. In a vehicle fitted with anti-lock braking system as mentioned above and a belt-type continuously variable transmission, this technology supplements the line pressure to prevent slippage of the belt in the continuously variable transmission while the anti-lock braking system is in operation.

German laid-open patent application DE 198 44 103 A1 describes a vehicle dynamic control system for a vehicle equipped with a continuously variable transmission. The vehicle dynamic control system reduces an over-/understeering by selectively braking the appropriate wheel or wheels of the vehicle. When reducing an over- or under-steering by selectively braking the wheel or wheels of the vehicle, the vehicle dynamic control system disclosed in this document keeps the gear ratio of the continuously variable transmission constant.

When the above kind of posture control system is used to eradicate understeer during cornering, (1) a reduction of the number of cylinders in which combustion is performed, (2) retard control over ignition timing, and (3) a reduction over the throttle opening result in a reduction in vehicle speed due to the suppression of engine output and vehicle driving torque. At the same time, a braking force is applied to the wheels on the inside of the corner, which further reduces the vehicle driving torque and creates of a moment in the turning direction of the vehicle. This improves the turn-in performance of the vehicle, but leads to the following problem, especially in the case of intentional understeering when the understeer has been intentionally caused by the driver pressing the accelerator pedal.

During intentional understeering, an unnecessarily large reduction in engine output or application of the brakes results in the control performing the opposite of what is intended by the driver, in what is referred to as "control interference", and the driver may feel that the vehicle is behaving peculiarly or is loosing speed. In particular, when the control that reduces the engine output causes a drop in engine speed, the acceleration of the vehicle following the rectification of the understeer is poor, and excessive use of the brakes can destabilize the behavior of the vehicle.

The present invention is intended for use in a vehicle that is equipped with a continuously variable transmission. The invention has an object of avoiding problems, such as destabilization of the behavior of the vehicle due to excessive braking and a deterioration in acceleration due to a fall in engine speed, that occur when understeer during cornering is rectified using both posture control and control over the gear ratio of the continuously variable transmission.

## SUMMARY OF THE INVENTION

In order to solve the problem described above, a vehicle overall control system according to the present invention has the following configuration:

An overall control system for a vehicle that includes (i) a posture control apparatus that controls vehicle posture in a yaw direction during cornering by controlling output of the engine and braking forces applied to right and left wheels and (ii) a continuously variable transmission whose gear ratio can be steplessly changed, the overall control system including: an understeer detecting means for detecting understeer while the vehicle is cornering; an engine output reducing means for reducing the engine output by performing control to reduce a number of cylinders of the engine in which combustion is performed and/or performing control to retard an ignition timing; a gear ratio changing means for changing the gear ratio of the continuously variable transmission; and a power train control means for controlling, when the understeer detecting means has detected the understeer, a reduction in the engine output by the engine output reducing means and/or a change in the gear ratio of the continuously variable transmission by the gear ratio changing means to reduce vehicle driving torque.

The vehicle overall control system according to the present invention is characterized in that the power train control means, when the understeer detecting means has detected the understeer, reduces the vehicle driving torque to a target driving torque. When the vehicle driving torque cannot be reduced to the target driving torque by performing control to make a reduction in the number of cylinders in which combustion is performed, control is performed in addition over the gear ratio of the continuously variable transmission to reach the target driving torque. Thereby the power train control means reduces the vehicle driving torque by reducing the number of cylinders in which combustion is performed and changing the gear ratio of the continuously variable transmission and, if the target value of the vehicle driving torque is still not reached, then further reduces the number of cylinders in which combustion is performed.

Various aspects of the invention are described in the following.

A first aspect of the present invention is that for a vehicle equipped with a continuously variable transmission, when understeer is detected, the vehicle driving torque can be reduced by shifting up the gear ratio of the continuously variable transmission, for example. By doing so, the execution of control over the brakes can be avoided to the greatest possible extent, while the reductions in engine output and engine speed can be suppressed, thereby stabilizing the posture of the vehicle and assisting in the avoidance of large drops in speed, as well as improving the acceleration of the vehicle following the rectification of the understeer.

However, when posture control and control over the gear ratio are simultaneously performed, there is the problem of how the roles of these two kinds of control should be set. This is a new issue in the realization of favorable cornering.

This issue is addressed by a second aspect of the invention, where when the understeer detecting means has detected the understeer, the power train control means reduces the vehicle driving torque with the engine output reducing means and has the gear ratio changing means change the gear ratio of the continuously variable transmission so as to suppress fluctuations in the vehicle driving torque that accompany control to reduce the engine output.

By operating as described above, when understeer is detected during cornering, the engine output reducing means has the engine output reduced to rectify the understeer. When doing so, the gear ratio of the continuously variable transmission is changed so as to suppress any fluctuations in vehicle driving torque due to the control that reduces the engine output. As a result, the vehicle driving torque can be smoothly and precisely changed so that the understeer can be favorably rectified in accordance with the state of the vehicle.

According to a third aspect of the invention, it is preferable that the power train control means has the gear ratio changing means change the gear ratio of the continuously variable transmission so as to interpolate stepped changes in the vehicle driving torque due to a reduction in the number of cylinders in which combustion is performed.

By operating as described above, when the control is performed by the engine output reducing means to reduce the number of cylinders in which combustion is performed, the gear ratio changing means has the gear ratio of the continuously variable transmission changed so as to interpolate the stepped changes in vehicle driving torque that are caused by the reduction in the number of cylinders in which combustion is performed. As a result, the vehicle driving torque can be smoothly reduced to rectify the understeer, thereby avoiding cases where the behavior of the vehicle is destabilized due to a stepped change in the driving torque.

According to a fourth aspect of the invention, it is preferable that the power train control means in the second or third aspect of the present invention has the gear ratio changing means change the gear ratio of the continuously variable transmission in synchronization with a change in the vehicle driving torque that accompanies control to reduce the engine output by the engine output reducing means.

By operating as described above, the gear ratio of the continuously variable transmission is changed in synchronization with the reduction in vehicle driving torque due to the control that reduces the engine output. Consequently, when the responsiveness of control over the engine is poor compared with control over the gear ratio, the timing at which the vehicle driving torque is changed due to the two types of control is synchronized, so that, for example, unstable control where the vehicle driving torque is first changed by control over the gear ratio and then changed by control over the engine can be avoided.

According to a fifth aspect of the invention, it is preferable that, when the vehicle driving torque cannot be reduced to a target value by performing control to make a reduction in the number of cylinders in which combustion is performed, the power train control means in the second to fourth aspect of the present invention reduces the vehicle driving torque by having the reduction made in the number of cylinders in which combustion is performed and having the gear ratio of the continuously variable transmission changed and, if the target value of the vehicle driving torque is still not reached, then has a further reduction made in the number of cylinders in which combustion is performed.

By operating as described above, when the vehicle driving torque is to be reduced by a predetermined amount and the driving torque cannot be reduced to the target value by making a reduction in the number of cylinders in which combustion is performed, the driving torque is reduced further by changing the gear ratio of the continuously variable transmission. Only when this is still insufficient to reduce the driving torque to the target value is a further reduction made in the number of cylinders in which combustion is performed. As a result, the vehicle driving torque can be reduced to the target value while minimizing the reduction in the number of cylinders in which combustion is performed.

According to a sixth aspect of the invention, when the understeer detecting means has detected the understeer, the power train control means in the first aspect of the invention first has the vehicle driving torque reduced by having the gear ratio changing means change the gear ratio, and, if the vehicle driving torque cannot be reduced to a target value by changing the gear ratio, then has the engine output reduced by the engine output reducing means.

By operating as described above, when understeer is detected during cornering, the vehicle driving torque is first reduced by controlling the gear ratio of the continuously variable transmission. When this control is insufficient to rectify the understeer, the engine output is reduced to further reduce the vehicle driving torque. This means that relatively mild cases of understeer can be rectified by merely controlling the gear ratio of the continuously variable transmission.

In most cases, control over the gear ratio is more responsive than control over the engine and more precise control is possible. This means that the understeer can be favorably rectified. As unnecessary reductions in the engine output are avoided, there is the added benefit that favorable acceleration can be attained after the understeer has been rectified.

According to a seventh aspect of the invention, an overall control system in accordance with any of the second to sixth aspects of the present invention further includes a braking force control means for controlling, when the understeer detected by the understeer detecting means is greater than a predetermined extent, the braking forces using the posture control means and prohibiting a reduction in the vehicle driving torque by the power train control means.

By operating as described above, when pronounced understeer is detected by the understeer detecting means during cornering, control is performed over the braking forces by the posture control apparatus in place of the control over the vehicle driving torque achieved by controlling the engine or gear ratio. This means that pronounced understeer can be reliably rectified.

As described above, when understeer of a preset extent or greater is detected for a vehicle that is equipped with a continuously variable transmission whose gear ratio can be steplessly changed and a posture control apparatus that controls vehicle posture in a yaw direction during cornering by controlling output of the engine and braking forces, the present invention performs control to reduce the engine output and/or gear ratio of the continuously variable transmission to reduce the vehicle driving torque and vehicle speed.

When doing so according to the second to fifth aspects of the invention, the fluctuations in vehicle driving torque that accompany reductions in the engine output are suppressed by control over the gear ratio. This means that stepped changes in driving torque due, for example, to a reduction of the number of cylinders in the engine where combustion is performed can be avoided, and that vehicle driving torque can be smoothly and precisely controlled. As a result, understeer can be favorably rectified for the vehicle in keeping with the state of the vehicle.

According to the sixth aspect of the present invention, when understeer is detected, control over the gear ratio is given preference when reducing the vehicle driving torque. When the vehicle driving torque cannot be reduced to the target value by control over the gear ratio alone, control is performed to reduce the engine output. This means that understeer can be rectified with highly responsive control and that unnecessary reductions in the engine output can be avoided. As a result, acceleration following the rectification of the understeer is improved.

**BRIEF DESCRIPTION OF THE DRAWINGS**

Fig. **1** is a block diagram showing the control system that is an embodiment of the present invention.
Fig. **2** is a simplified drawing showing the configuration of a continuously variable transmission that is used in the present embodiment.
Fig. **3** is a gearing control map for the continuously variable transmission.
Fig. **4** is a flowchart showing a main routine of the control operation performed in the present embodiment of the invention.
Fig. **5** is a flowchart showing a subroutine of the same control operation.
Fig. **6** is a map for a first torque reduction that is used in the above subroutine.
Fig. **7** is a map for a second torque reduction that is used in the same subroutine.
Fig. **8** is a map for the engine output that is used in the same subroutine.
Fig. **9** is a map for a base value for the allowed change in gear ratio that is used in the same subroutine.
Fig. **10** is a map for the first correction coefficient that is used in the same subroutine.

Fig. **11** is a map for the second correction coefficient that is used in the same subroutine.

Fig. **12** is a torque reduction map, used in the same subroutine, for the case where the engine is warm.

Fig. **13** is a torque reduction map, used in the same subroutine, for the case where the engine is cold.

Fig. **14** is a flowchart showing a control example of the control over the gear ratio that is performed after the understeer has been rectified.

Fig. **15** is a flowchart showing a second control example.

Fig. **16** is a flowchart showing a third control example.

Fig. **17** is a flowchart showing a fourth control example.

## DETAILED DESCRIPTION OF THE INVENTION

The following describes an embodiment of the present invention.

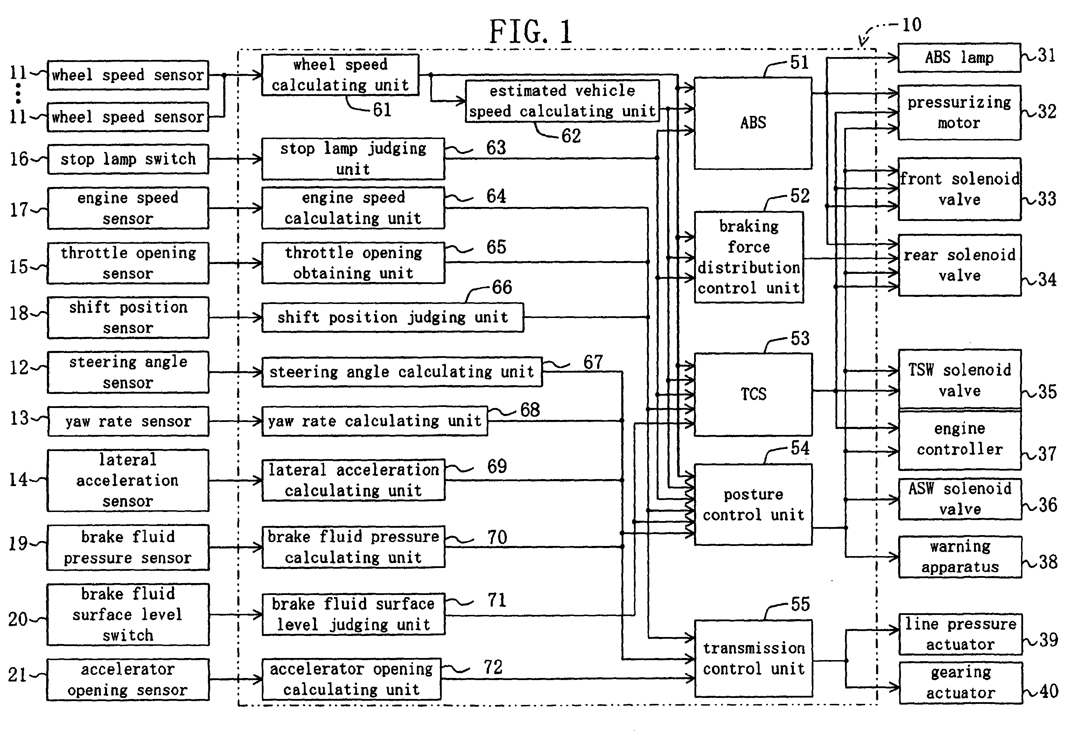

First, a control system of this embodiment is described with reference to Fig. **1.** This system includes a control unit **10** that receives inputs from wheel speed sensors (each numbered **11**) detecting the speed of each wheel, a steering angle sensor **12** detecting the steering angle of the steering wheel, a yaw rate sensor **13** detecting the yaw rate of the vehicle, a lateral acceleration sensor **14** detecting the acceleration of the vehicle in a lateral direction, a throttle opening sensor **15** detecting the throttle opening of the engine, a stop lamp switch **16** canceling any control performed by an anti-lock braking system, an engine speed sensor **17** detecting the engine speed (revolutions per minute), a shift position sensor **18** detecting the position, such as "drive" or "reverse", of the continuously variable transmission shift lever, a brake fluid pressure sensor **19** detecting the brake fluid pressure of a master cylinder used as a brake fluid pressurizer for the braking system, a brake fluid surface level switch **20** detecting the level of the surface of the brake fluid in a reserve tank in the same braking system, and an accelerator opening sensor **21** detecting the accelerator opening.

The control unit **10** outputs control signals to an ABS lamp **31** indicating whether the anti-lock braking system is operating, a pressurizing motor **32** operating a pressurizing pump that is provided as a second brake fluid pressurizer for the braking system, a front solenoid valve **33** and a rear solenoid valve **34** provided as pressurizing/depressurizing means that supply and draw away brake fluid to and from brake apparatuses that are provided on each wheel, a TSW solenoid valve **35** provided as a pressurizing/depressurizing means that connects and cuts off a passage between the master cylinder and the brake apparatuses provided on each wheel, an ASW solenoid valve **36** provided as a pressurizing/depressurizing means that connects and cuts off a passage between the master cylinder and the pressurizing pump mentioned above, an engine controller **37** controlling the engine output, a warning apparatus **38** informing the driver when vehicle posture control is being performed during cornering, a line pressure actuator **39** controlling the line pressure of a continuously variable transmission, and a gearing actuator **40** controlling the gear ratio of the continuously variable transmission.

In order to receive an input of signals from the sensors and switches numbered **11** to **20**, perform predetermined processes, and output control signals to the components numbered **31** to **40**, the control unit **10** is constructed as described below.

The control unit **10** includes an anti-lock braking system unit **51** (hereafter referred to as the "ABS **51**"), a braking force distribution control unit **52** that distributes the braking force so as to keep the rear wheels from locking during braking, a traction control unit **53** (hereafter referred to as the "TCS **53**") that prevents the drive wheels from slipping due to an excessive driving force being applied to the drive wheels, a posture control unit **54** that controls the posture of the vehicle in the yaw direction during cornering, and a transmission control unit **55** that controls the operation of the line pressure actuator **39** and the gearing actuator **40** that control the posture of the vehicle through the operation of the continuously variable transmission.

In the control unit **10**, a wheel speed calculating unit **61** and an estimated vehicle speed calculating unit **62** calculate the wheel speed of each wheel and the estimated vehicle speed, based on signals received from the wheel speed sensor **11** mounted on each wheel. These calculated values are inputted into the ABS **51**, the braking force distribution control unit **52**, the TCS **53**, and the posture control unit **54**.

A signal outputted by the stop lamp switch **16** is inputted, via a stop lamp judging unit **63**, into the ABS **51**, the braking force distribution control unit **52**, the TCS **53**, and the posture control unit **54**.

The signals outputted by the engine speed sensor **17**, the throttle opening sensor **15**, and the shift position sensor **18** are inputted, via an engine speed calculating unit **64**, an accelerator opening obtaining unit **65**, and a shift position judging unit **66**, respectively, into the TCS **53**, the posture control unit **54**, and the transmission control unit **55**.

The signals outputted by the steering angle sensor **12,** the yaw rate sensor **13**, the lateral acceleration sensor **14**, and the brake fluid pressure sensor **19** are respectively inputted into a steering angle calculating unit **67**, a yaw rate calculating unit **68**, a lateral acceleration calculating unit **69**, and a brake fluid pressure calculating unit **70**. Based on these signals, the calculating units calculate the steering angle, the yaw rate, the lateral speed, and the brake fluid pressure in the master cylinder. The results of these calculations are inputted into the posture control unit **54** and the transmission control unit **55**.

The signal from the brake fluid surface level switch

20 is inputted into the TCS **53** and the posture control unit **54** via a brake fluid surface level judging unit **71**, and the signal from the accelerator opening sensor **21** is inputted into the transmission control unit **55** via the accelerator opening calculating unit **72**.

The ABS **51** calculates control values based on the inputted signals. Based on the calculation results, the ABS **51** outputs signals to the ABS lamp **31**, the pressurizing motor **32**, the front solenoid valve **33**, and the rear solenoid valve **34** to control the operation of these components. The braking force distribution control unit **52** also controls the operation of the rear solenoid valve **34**.

The TCS **53** outputs signals to the pressurizing motor **32**, the front solenoid valve **33**, the rear solenoid valve **34**, the TSW solenoid valve **35**, and the engine controller **37** to control the operation of these components.

The posture control unit **54** outputs signals to the pressurizing motor **32**, the front solenoid valve **33**, the rear solenoid valve **34**, the TSW solenoid valve **35**, the ASW solenoid valve **36**, the engine controller **37**, and the warning apparatus **38** to control the operation of these components. In other words, the sensors and switches numbered **11** to **20**, the posture control unit **54** and calculating units and judging units numbered **61** to **71** of the control unit **10**, the pressurizing motor **32**, the valves **33** to **36** and the engine controller **37** form a posture control apparatus that controls the vehicle posture in the yaw direction during cornering by individually controlling the engine output and the braking forces applied to the left and right wheels.

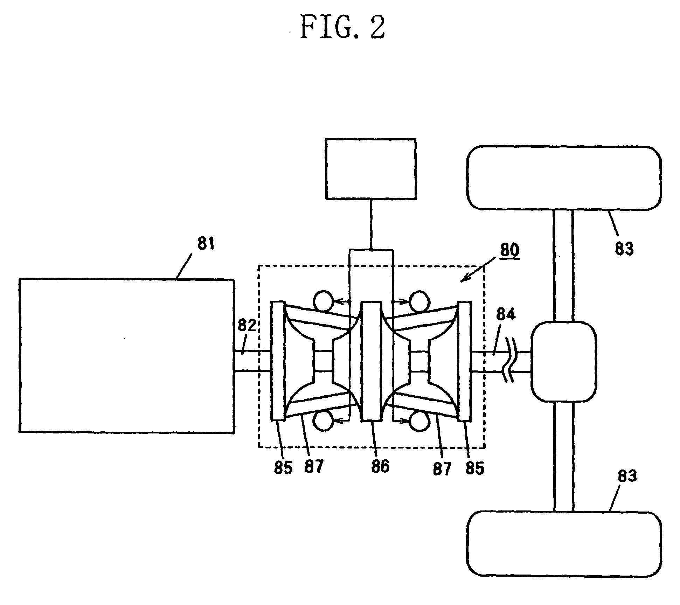

The transmission control unit **55** outputs signals to the line pressure actuator **39** and the gearing actuator **40** to control the operation of these components. The following describes one example of a continuously variable transmission that is controlled by the transmission control unit **55**. In the present embodiment, a troidal continuously variable transmission is used. As shown in Fig. **2**, a continuously variable transmission **80** (hereafter referred to as the "CVT **80**") is disposed between an output axle **82** of an engine **81** and a drive axle **84** on which the drive wheels (both numbered **83**) are mounted. The CVT **80** is constructed so as to transmit the output rotation of the engine **81** to the drive wheels **83** with stepless gearing.

In more detail, the troidal CVT **80** includes a pair of input-side disks **85** that are connected to the output axle **82** of the engine **81**, an output-side disk **86** that is connected to the drive axle **84** and is arranged so that its two main surfaces face the two input-side disks **85**, and friction rollers **87** that transmit torque between the disks **85** and **86** by being positioned between the opposing surfaces of the input-side disks **85** and the output-side disk **86** and in frictional contact with them. The tilt angles of the friction rollers **87** can be changed due to oil pressure, resulting in a change in the rotational radius of the contact points of the friction rollers **87** with the disks **85** and **86**, so that the power transmission from the engine output axle **82** to the drive axle **84** can be steplessly varied.

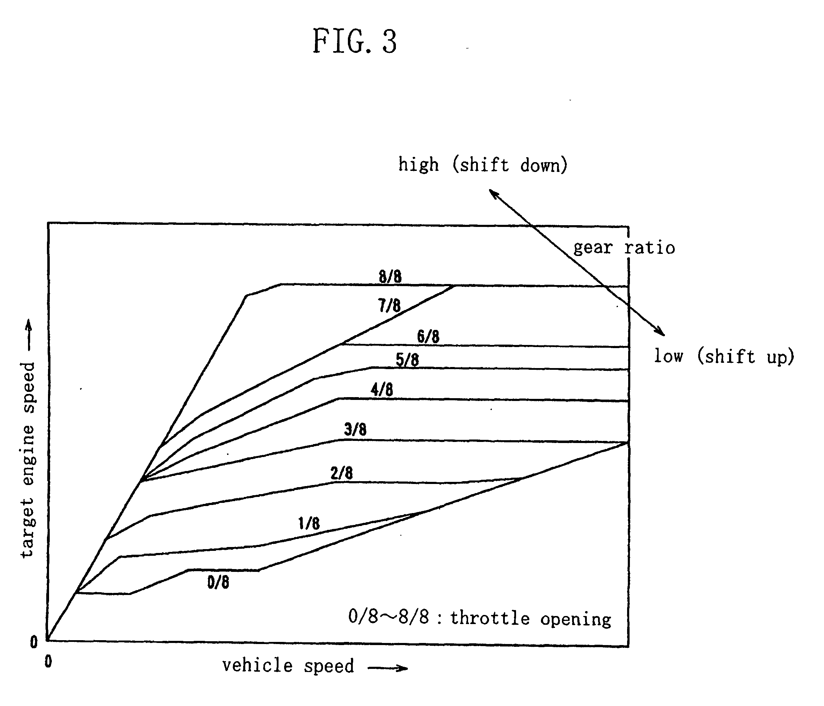

As shown in Fig. **3**, the CVT **80** has its gear ratio controlled in accordance with a gearing map that is stored in the transmission control unit **55**, so that a target engine speed is maintained in keeping with the speed of the vehicle and the throttle opening (or accelerator opening).

The following describes the posture control in the yaw direction of the vehicle during cornering, which is achieved by the posture control unit **54** and the transmission control unit **55** in the control unit **10**. It should be noted that in the present embodiment, control to rectify oversteer is performed by the posture control unit **54** alone, whereas control to rectify understeer is performed by the posture control unit **54** and the transmission control unit **55**.

First, an overview of these kinds of control is given. The control performed to rectify oversteer is as follows. When it is detected that the actual yaw rate $\phi$ for the vehicle as detected by the yaw rate sensor **13** exceeds the target yaw rate $\phi_0$ by at least a preset amount, or in other words, when the rate at which the yaw angle is increasing is too high, a braking force is applied to the front wheel situated on the outside of the turn to produce a turning moment for the vehicle in an opposite direction to the turning direction, which rectifies the oversteer.

The control performed to rectify understeer is as follows. When it is detected that the actual yaw rate $\phi$ for the vehicle falls short of the target yaw rate $\phi_0$ by at least a preset amount, or in other words, when the rate at which the yaw angle is increasing is too low, control can be performed to lower the engine output and change the gear ratio of the CVT **80** so as to reduce the vehicle driving torque and vehicle speed. Also, when necessary, a braking force is applied to the front wheel situated on the inside of the turn. These measures reinforce a cornering force that opposes the centrifugal force that acts on the vehicle and produce a turning moment for the vehicle in the turning direction, which rectifies the understeer.

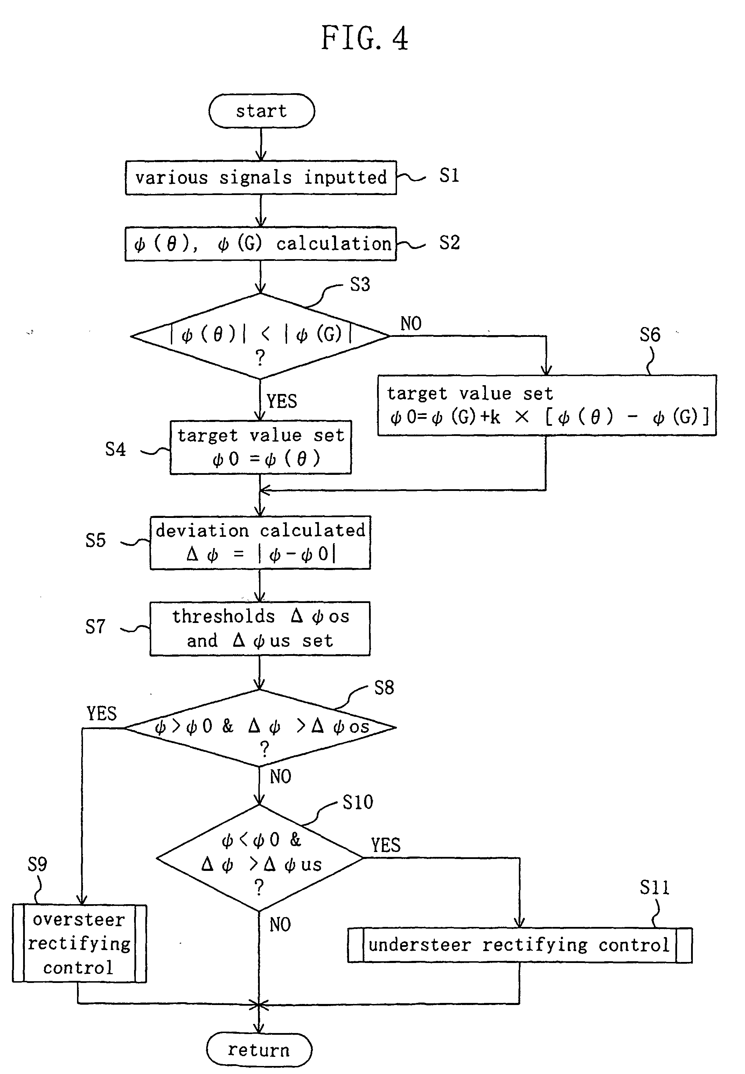

The following describes the overall operation performed for posture control, with reference to the flowchart shown in Fig. **4**.

First, in step **S1**, the control unit **10** reads in signals from the sensors and switches numbered **11** to **20** that are shown in Fig. **2**. In step **S2**, the control unit **10** calculates a first target yaw rate $\phi_{(\theta)}$ in accordance with the steering angle $\theta$ that has been calculated by the steering angle calculating unit **67** based on the signal outputted by the steering angle sensor **12** and a second target yaw rate $\phi_{(G)}$ in accordance with the lateral acceleration $G$ that has been calculated by the lateral acceleration calculating unit **69** based on the signal outputted by the lateral acceleration sensor **14**.

More specifically, the first target yaw rate $\phi_{(\theta)}$ is calculated using Equation (1) below, using (a) the estimated vehicle speed V that has been calculated by the estimated vehicle speed calculating unit **62** based on the signals outputted by the wheel speed sensors **11** and (b) the steering angle θ that has been calculated by the steering angle calculating unit **67** as described above. In Equation (1), *K* represents a stability factor for the vehicle, while *L* represents the wheelbase.

$$\phi_{(\theta)} = V \times \theta / \{(1+K \times V^2) \times L\} \quad (1)$$

The second target yaw rate $\phi_{(G)}$ is calculated using Equation (2) below, using the estimated vehicle speed V described above and the lateral acceleration *G* that has been calculated by the lateral acceleration calculating unit **69** as described above.

$$\phi_{(G)} = G/V \quad (2)$$

Next, in step **S3**, the control unit **10** judges whether the absolute value of the first target yaw rate $\phi_{(\theta)}$ is below the absolute value of the second target yaw rate $\phi_{(G)}$. This judgment is performed so that the value, out of the first target yaw rate $\phi_{(\theta)}$ and the second target yaw rate $\phi_{(G)}$, with the smaller absolute value is set as the target yaw rate $\phi_0$ that is used below during vehicle posture control.

When the judgment "YES" is given in step **S3** ($|\phi_{(\theta)}| < |\phi_{(G)}|$), the procedure advances to step **S4** where the first target yaw rate $\phi_{(\theta)}$ that is based on the steering angle θ is set as the target yaw rate $\phi_0$. After this, in step **S5,** the control unit **10** calculates the deviation Δφ between the target yaw rate $\phi_0$ used for control and the actual yaw rate φ for the vehicle that has been calculated by the yaw rate calculating unit **68** based on the signal outputted by the yaw rate sensor **13**. This deviation Δφ is defined as the absolute value of the deviation between the actual yaw rate φ and the target yaw rate $\phi_0$ used for control (Δφ = |φ - $\phi_0$|).

When the judgment "NO" is given in step **S3** ($|\phi_{(\theta)}|$ $|\phi_{(G)}|$), the procedure advances to step **S6** where the second target yaw rate $\phi_{(G)}$ that is based on the lateral acceleration *G* is set as the target yaw rate $\phi_0$. In this case, the target yaw rate $\phi_0$ for control is amended in accordance with Equation (3) using a steering angle component. Here, the value *k* in Equation (3) is a constant that is below 1.

$$\phi_0 = \phi_{(G)} + k \times [\phi_{(\theta)} - \phi_{(G)}] \quad (3)$$

After this, in step **S5,** the control unit **10** calculates the deviation Δφ between the amended target yaw rate $\phi_0$ and the actual yaw rate φ.

Here, when the target yaw rate $\phi_0$ for control is set using the second target yaw rate $\phi_{(G)}$ that is based on the lateral acceleration *G*, the target yaw rate $\phi_0$ is amended using the steering angle component to prevent the implementation of unnecessary posture control for the case when the understeer results intentionally from the driving style of the driver, that is, intentional understeering.

This is to say, there are two kinds of understeer. A first kind is where excessive speed prevents the vehicle from turning in accordance with the driver's operation of the steering wheel. A second kind is intentionally caused by an operation where the driver keeps the steering wheel at a constant angle and simultaneously increases the driving force. When the target yaw rate $\phi_0$ for control is set using the second target yaw rate $\phi_{(G)}$ that is based on the lateral acceleration *G*, it is not possible to distinguish which of the two kinds of understeer has occurred from the value of the lateral acceleration *G* alone.

For the above reason, when the second target yaw rate $\phi_{(G)}$ is taken as the target yaw rate $\phi_0$ for control, the target yaw rate $\phi_0$ is amended using the steering angle component so that posture control is actively implemented for cases where the driver has turned the steering wheel excessively for the current vehicle speed, but is suppressed for cases where the understeer is intended by the driver. In this case, the constant *k* can be changed in accordance with the lateral acceleration *G* relative to a road friction coefficient or the like, so that posture control can always be implemented with suitable timing for the amount of friction achieved for the present road surface.

After calculating the deviation Δφ between the actual yaw rate φ and the target yaw rate $\phi_0$ in step **S5** as described above, the control unit **10** executes step **S7**, where the control unit **10** sets the threshold value $\Delta\phi_{os}$ for the application of oversteer rectifying control and the threshold value $\Delta\phi_{us}$ for the application of understeer rectifying control.

Next, when the actual yaw rate φ exceeds the target yaw rate $\phi_0$ (i.e. oversteer has occurred) and the absolute value of the deviation Δφ between the two rates exceeds the threshold value $\Delta\phi_{os}$, the control unit **10** executes step **S9** following step **S8** and applies control to rectify the oversteer. Conversely, when the actual yaw rate φ is below the target yaw rate $\phi_0$ (i.e. understeer has occurred) and the absolute value of the deviation Δφ between the two rates exceeds the threshold value $\Delta\phi_{us}$, the control unit **10** executes step **S11** following step **S10** and applies control to rectify the understeer.

The following describes the control to rectify understeer in step **S11** in more detail. This operation is characteristic to the present invention.

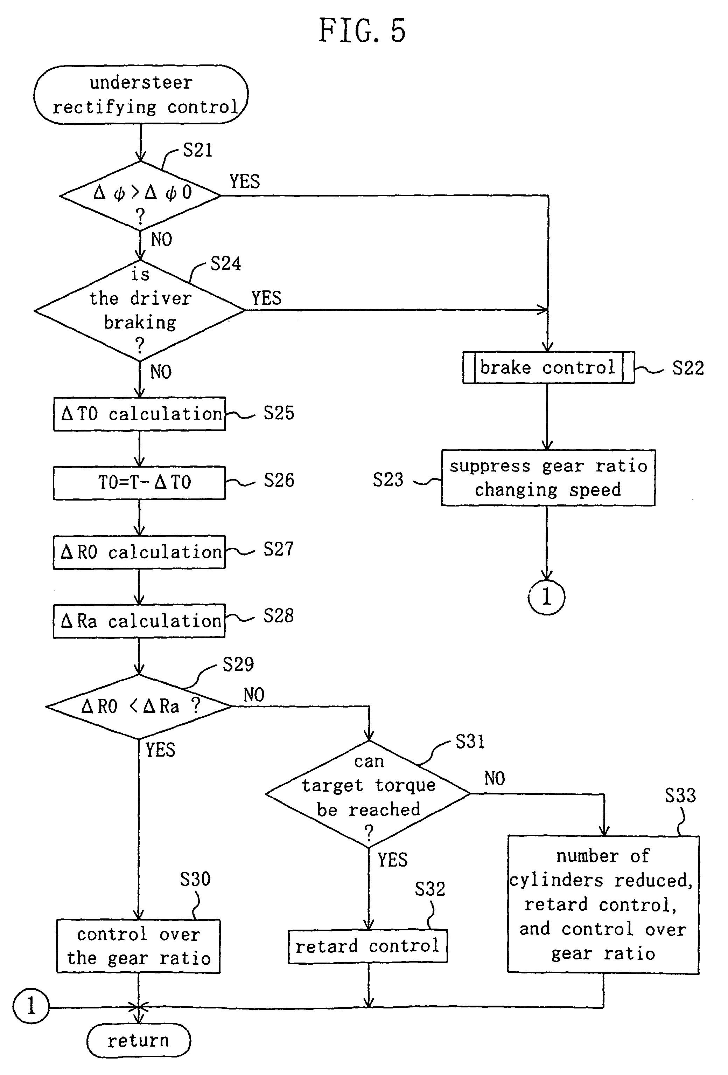

This control is performed in accordance with the flowchart shown in Fig. **5**. First, in step **S21**, the control unit **10** judges whether the deviation Δφ of the actual yaw rate φ from the target yaw rate $\phi_0$ used for control exceeds a predetermined threshold $\Delta\phi_0$.

After this, if the deviation Δφ exceeds the prede-

termined threshold $\Delta\phi_0$, which is to say, the actual yaw rate $\phi$ is far lower than the target yaw rate $\phi_0$ (corresponding to understeer), the control unit **10** executes step **S22** in which control is performed to rectify the understeer through immediate braking without performing understeer rectifying control by engine control and gear ratio control of the CVT. This is because in this case it is necessary to reduce the speed of the vehicle immediately, while providing the vehicle with a moment oriented in the turning direction to reliably rectify the understeer.

It should be noted that when braking is performed in this way, step **S23** is also executed so that the gear ratio of the CVT is controlled, in the same way as during normal driving, in accordance with a map (shown in Fig. **3**) that associates gear ratios with the current state of the vehicle. However, in the present case, control is performed so that the gear ratio is changed more gradually than during normal driving. This is because in cases like the one above where an immediate rectification of understeer is required, it is necessary to perform effective understeer rectifying control that focuses on braking and suppresses changes to the gear ratio.

When in step **S21,** the deviation $\Delta\phi$ is no greater than the predetermined threshold $\Delta\phi_0$, the control unit **10** executes step **S24**, where the control unit **10** judges, based on a signal outputted from the brake fluid pressure sensor **19** that detects the pressure of the brake fluid in the master cylinder, whether the driver is pressing the brake pedal. If the driver is pressing the brake pedal, the control unit **10** executes step **S22** and, in the same way as when the deviation $\Delta\phi$ exceeds the predetermined threshold $\Delta\phi_0$,only performs control that rectifies the understeer through braking. This is because when the driver presses the brake pedal, the posture of the vehicle is dominated by the braking, so that engine control or control of the gear ratio become largely ineffective in this case.

On the other hand, when the deviation $\Delta\phi$ is no greater than the predetermined threshold $\Delta\phi_0$ and the driver is not pressing the brake pedal, or in other words, when it is judged that the understeer has been intentionally produced due to the driving style of the driver, the control unit **10** executes step **S25**, and calculates a target reduction $\Delta T_0$ for the vehicle driving torque $T$ that is based on the yaw rate $\phi$.

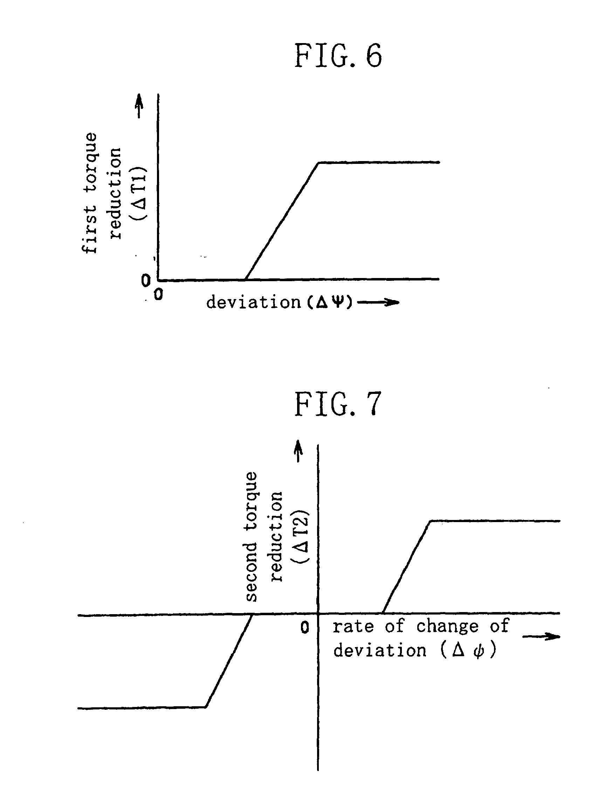

This calculation of the target torque reduction $\Delta T_0$ is performed based on the maps shown in Figs. **6** and **7**. That is to say, a first torque reduction $\Delta T_1$ corresponding to the magnitude of the deviation $\Delta\phi$ is found from the map in Fig. **6** and a second torque reduction $\Delta T_2$ corresponding to the rate of change in the deviation $\Delta\phi$ is found from the map in Fig. **7**. These torque reductions $\Delta T_1$ and $\Delta T_2$ are then added together to produce the target torque reduction $\Delta T_0$ ($\Delta T_0 = \Delta T_1 + \Delta T_2$).

As shown in Fig. **6**, the first torque reduction $\Delta T_1$ is set so as to increase in proportion with an increase in the deviation $\Delta\phi$ from a point where the deviation $\Delta\phi$

reaches a predetermined value until a set limit is reached.

As shown in Fig. **7**, the second torque reduction $\Delta T_2$ is set so as to change in a range for which an absolute value of the rate of change in the deviation $\Delta\phi$ is above a predetermined value until a set limit is reached. In the positive direction (a direction where the deviation $\Delta\phi$ is increasing), the second torque reduction $\Delta T_2$ is a positive value whose magnitude increases in proportion with an increase in the rate of change of the deviation $\Delta\phi$ within the stated range. In the negative direction (a direction where the deviation $\Delta\phi$ is decreasing), the second torque reduction $\Delta T_2$ is a negative value whose magnitude increases in proportion with an increase in the rate of change of the deviation $\Delta\phi$ in the stated range.

After this, in step **S26**, the control unit **10** calculates the target driving torque $T_0$ by subtracting the target torque reduction $\Delta T_0$ found as described above from the present vehicle driving torque $T$. In step **S27**, the control unit **10** calculates the target change $\Delta R_0$ for the gear ratio $R$ of the CVT that achieves this target torque reduction $\Delta T_0$.

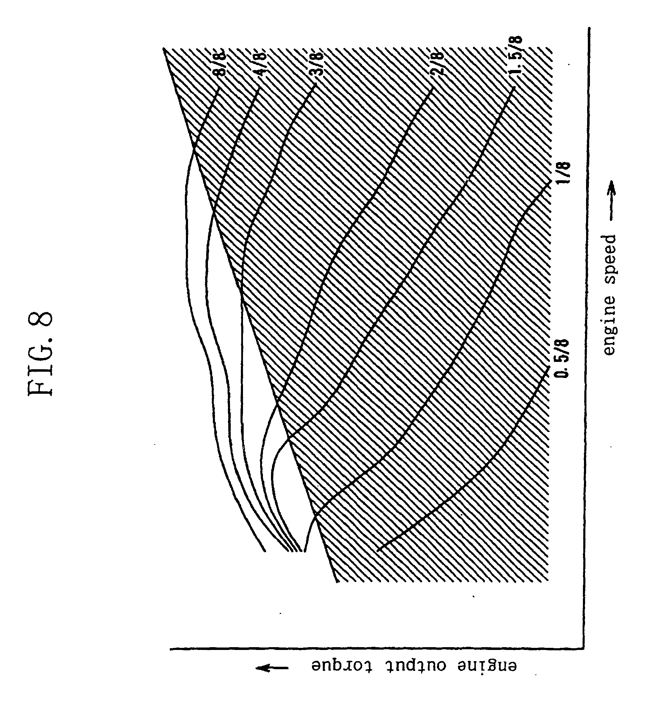

To calculate this target change $\Delta R_0$, uses the engine output characteristics map shown in Fig. **8** is used. In more detail, when changing the gear ratio $R$ of the CVT with the engine in a particular state to cause a reduction in the vehicle driving torque $T$, it is normally thought that shifting up the gear ratio $R$ will reduce the amplification factor for the engine output torque. In this case, as shown by the hatched region of Fig. **8** however, the decrease in engine speed that accompanies the shifting up results in an increase in engine output torque, so that the vehicle driving torque $T$ will not necessarily fall in this situation. For this reason, the target change $\Delta R_0$ for the gear ratio of the CVT that is to achieve the target driving torque $T_0$ is calculated based on the present gear ratio $R$ and the engine output characteristics map shown in Fig. **8**, with a shifting down of the gear ratio also being considered.

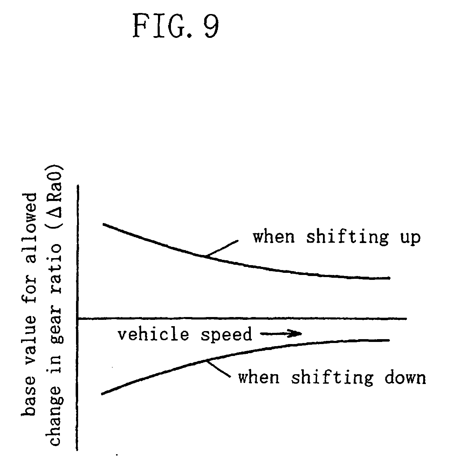

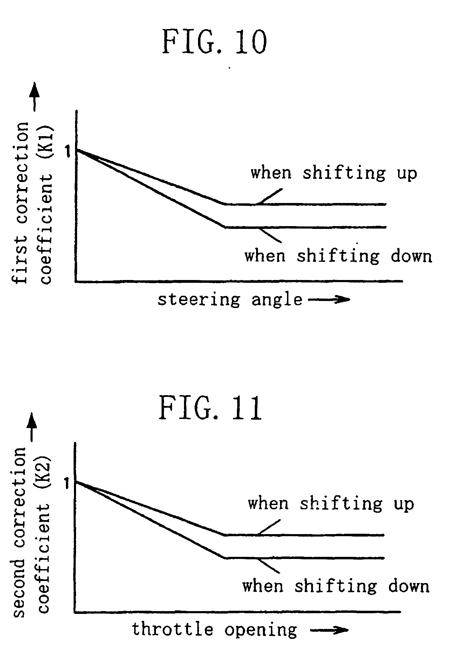

Also in step **S28**, the allowed change $\Delta R_a$ in the gear ratio $R$ of the CVT for the present state of the vehicle is set based on the maps shown in Figs. **9** to **11**. In more detail, the base value $\Delta R_{a0}$ for the allowed change $\Delta R_a$ in the gear ratio $R$ is found from the map shown in Fig. **9** based on the present vehicle speed. First and second correction coefficients $K_1$ and $K_2$ are also found from the maps shown in Figs. **10** and **11** based on the present steering angle and throttle opening, respectively. After this, the base value $\Delta R_{a0}$ for the allowed change $\Delta R_a$ that has been obtained from the map in Fig. **9** is corrected by multiplying it by the correction coefficients $K_1$ and $K_2$ so as to produce the final value (= $\Delta R_{a0} \times K_1 \times K_2$) for the allowed change $\Delta R_a$ in the gear ratio $R$.

Here, as shown in Fig. **9**, the base value $\Delta R_{a0}$ for the allowed change $\Delta R_a$ becomes smaller as vehicle speed increases, which is to say, the allowed change in the gear ratio is set so as to become smaller, and the allowed change in the gear ratio is also smaller when shifting down than when shifting up. This is because the destabilization of the behavior of the vehicle that accompanies a change in the gear ratio becomes more pronounced as the vehicle speed increases, and the extent of the destabilization is also greater when shifting down than when shifting up.

As shown in Figs. **10** and **11**, the first and second correction coefficients $K_1$ and $K_2$ are both no greater than **1** and are set so as to decrease as the steering angle and throttle opening increase. The values of the first and second correction coefficients $K_1$ and $K_2$ are also lower for the case where the gear ratio is shifted down than when the gear ratio is shifted up. This is because the destabilization of the behavior of the vehicle that accompanies a change in the gear ratio becomes more pronounced as the steering angle increases and as the throttle opening increases. The extent of the destabilization is also greater when shifting down than when shifting up, so that the allowed change to the gear ratio is restricted further when shifting down.

Once the target change $\Delta R_0$ for the gear ratio $R$ of the CVT that is to achieve the torque reduction leading to the target driving torque $T_0$ and the allowed change $\Delta R_a$ in the gear ratio $R$ have been calculated, step **S29** judges whether the target change $\Delta R_0$ is smaller than the allowed change $\Delta R_a$, which is to say, whether the target change $\Delta R_0$ in the gear ratio is within the allowed range. When this is the case, step **S30** performs control to have the gear ratio $R$ of the CVT changed by the target change $\Delta R_0$.

As a result, the gear ratio $R$ is changed within the allowed range, so that the vehicle driving torque $T$ is reduced to the target driving torque $T_0$ to rectify the understeer without disturbing the behavior of the vehicle.

On the other hand, when step **S29** judges that the target change $\Delta R_0$ of the gear ratio $R$ is equal to or larger than the allowed change $\Delta R_a$, which is to say, that the vehicle driving torque $T$ cannot be reduced to the target driving torque $T_0$ by changing the gear ratio within the allowed range, the control unit **10** performs control to reduce the engine output in step **S31** onwards. First, in step **S31**, it is judged whether the vehicle driving torque $T$ can be reduced to the target driving torque $T_0$ by performing retard control for the ignition timing. On judging that the vehicle driving torque $T$ can be reduced to the target driving torque $T_0$ by performing retard control, in step **S32** the control unit **10** performs retard control for the ignition timing to reduce the vehicle driving torque $T$ to the target driving torque $T_0$.

On judging that the vehicle driving torque $T$ cannot be reduced to the target driving torque $T_0$ by performing retard control alone, in step **S33** the control unit **10** has the engine output reduced, mainly by reducing the number of cylinders in which combustion is performed, and controls the gear ratio of the CVT to interpolate the stepped changes in engine output that accompany reductions in the number of cylinders. By doing so, the control unit **10** has the vehicle driving torque $T$ reduced to the target driving torque $T_0$.

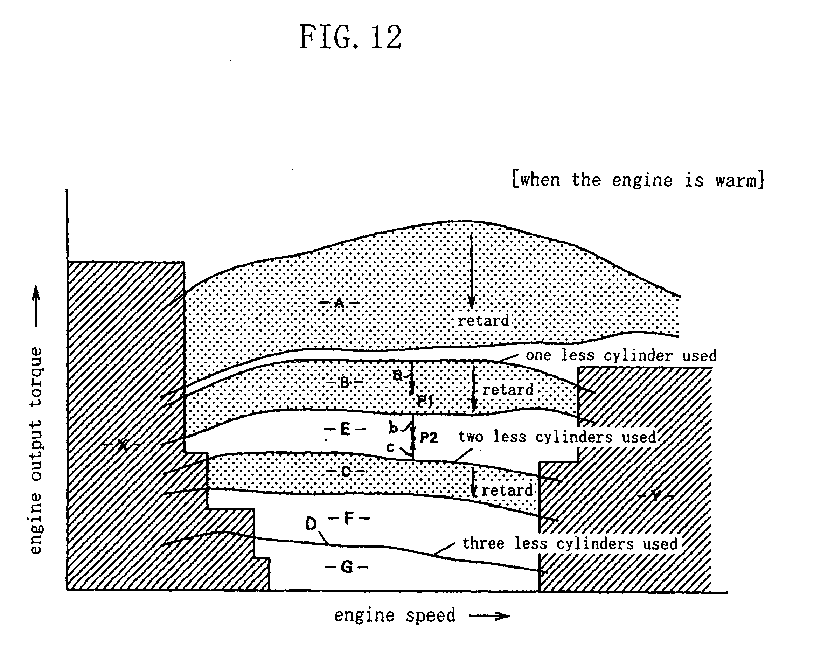

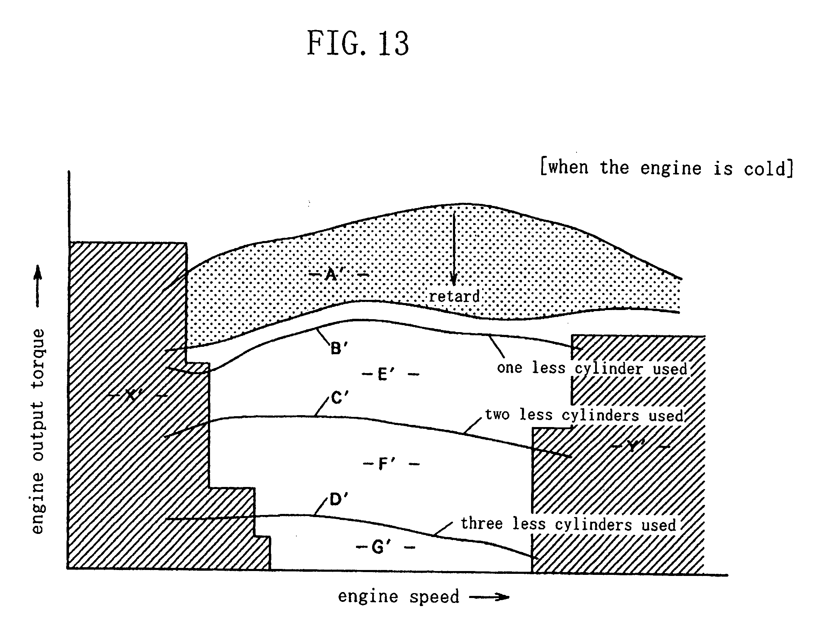

The control to reduce the engine output and control to change the gear ratio in steps **S32** and **S33** are performed as follows, using a torque reduction characteristics map for the engine, such as shown in Figs. **12** and **13**.

Fig. **12** shows, for a case where the engine is warm and the throttle is completely open, how the engine output torque is reduced by control that retards the ignition timing and control that reduces the number of cylinders in which combustion is performed. In Fig. **12,** the region A shows the range for which the output torque is reduced by retarding the ignition timing with combustion being performed in all cylinders, the region B shows the range for which the output torque is reduced by retarding the ignition timing with combustion being performed in all cylinders but one, and the region C shows the range for which the output torque is reduced by retarding the ignition timing with combustion being performed in all cylinders but two. The characteristic shown by the curve D is the output torque when combustion is not performed in three cylinders. While not illustrated, the same kind of torque reduction characteristics are set separately for various intermediate values of the throttle opening.

Fig. **13** shows, for a case where the engine is cold and the throttle is completely open, how the engine output torque is changed by control that retards the ignition timing and control that reduces the number of cylinders in which combustion is performed. In the same way as for the warm state shown in Fig. **12,** the region A' shows the range for which the output torque is reduced by retarding the ignition timing with combustion being performed in all cylinders. When the engine is cold, however, there is a pronounced deterioration in combustion when the ignition timing is retarded with combustion not being performed in one or more of the cylinders, and therefore, both types of control are not performed simultaneously, so that the curves B', C' and D' show the ranges for which the output torque is reduced when combustion is respectively performed in all cylinders but one, all cylinders but two, and all cylinders but three, with the ignition timing not being retarded in any of these cases. While not illustrated, the same kind of torque reduction characteristics are set also for various intermediate values of the throttle opening for the case when the engine is cold.

In the torque reduction characteristics maps in Figs. **12** and **13,** first and second inoperative ranges X, X' and Y, Y' where the vehicle cannot be driven are set in the torque reduction ranges for a range of low engine speeds and a range of high engine speeds. The first inoperative ranges X, X' denote engine speed ranges where there is the risk of the engine stalling due to the engine speed being too low. The second inoperative ranges Y, Y' denote engine speed ranges where there is the risk of rapid deterioration in the catalytic converter used to clean the exhaust gas due to the engine running at a high speed while one or more of the cylinders are not being used.

In step **S32** in the flowchart of Fig. **5**, when the torque can be reduced to the target driving torque To by merely retarding the ignition timing, the control unit **10** performs retard timing for the ignition timing within the region $A$ or $A'$ in Fig. **12** or **13** (or in a similar region in a map that is produced for an intermediate value of the throttle opening). On the other hand, in step **S33**, the control unit **10** performs both control to reduce the engine output and control to change the gear ratio of the CVT as described below to reduce the torque to the target driving torque $T_0$.

Out of convenience, the control performed in this case is described using Fig. **12** that shows the case where the engine is warm and the throttle is completely open. When reducing the engine output torque to reduce the vehicle driving torque to the target driving torque $T_0$, if the output torque is a point shown by the numeral $P_1$, for example, in the region $B$, the number of cylinders in which combustion is performed is reduced by one and retard control is performed for the ignition timing in that region $B$ so that the output torque is reduced to the value shown by the point $P_1$ (see arrow $a$ in Fig. **12**). This is also the case for a point in the region $C$, but when the engine torque is reduced to a value shown by a point on the curve $D$, the number of cylinders in which combustion is performed is reduced by three.

On the other hand, when the engine output torque that results in a reduction in the vehicle driving torque to the target driving torque $T_0$ is located in one of the regions E, F and G that show values that cannot be achieved by reducing the number of cylinders in which combustion is performed and retarding the ignition timing, control is performed over the gear ratio of the CVT in addition to these kinds of control over the engine.

In other words, when the engine output torque for reducing the vehicle driving torque to the target driving torque $T_0$ is a point shown by the numeral $P_2$ in the region $E$, the number of cylinders in which combustion is performed is reduced by one and the ignition timing is retarded by the maximum amount to reduce the engine output torque to the lowest value possible in the region $B$. The remaining reduction in engine output torque is achieved by changing the gear ratio of the CVT (see arrow $b$ in Fig. 12). Alternatively, the number of cylinders in which combustion is performed is reduced by two and the ignition timing is not retarded to reduce the engine output torque to the highest value possible in the region $C$, with the excessive part of the reduction in engine output torque being cancelled out by an increase in torque that is produced by controlling the gear ratio of the CVT (see arrow $c$ in Fig. **12**).

In the same way, when the engine output torque for reducing the vehicle driving torque to the target driving torque $T_0$ is a point in the region $F$ or the region $G$,

the gear ratio of the CVT is controlled so as to interpolate the regions that cannot be reached by control over the engine alone.

By operating in this way, regardless of to which value the target driving torque $T_0$ is set, the vehicle driving torque can be accurately and steplessly reduced to this target driving torque $T_0$. And thus, when the vehicle is experiencing understeer, the vehicle driving torque can be reduced in keeping with the extent of the understeer of the vehicle so as to effectively rectify understeer in all circumstances.

Here, when engine control is performed simultaneously with control over the gear ratio, the changes in vehicle driving torque that are due to such control occur simultaneously. Therefore, since there is a response lag when controlling the engine, engine control is commenced before the start of the control over the gear ratio. By doing so, unstable variations in torque can be avoided, such as when the vehicle driving torque is reduced in two steps, the torque temporarily increases before decreasing, or the torque temporarily decreases before increasing. As a result, the vehicle driving torque can be smoothly reduced to the target driving torque $T_0$.

It should be noted that when the engine is cold, the same kind of control is performed using the torque reduction characteristics map shown in Fig. **13** or any of the other maps produced for intermediate values of the throttle opening. In this case, the regions $E'$, $F'$, and $G'$ that lie between the characteristic curves $B'$, $C'$, and $D'$ are interpolated by performing control over the gear ratio of the CVT.

When performing control to reduce the vehicle driving torque results in the state of the engine falling in the first region $X$ or $X'$ shown in Figs. **12** and **13** where driving is not possible, the gear ratio of the CVT is shifted down to increase the engine speed so to avoid the first region $X$ or $X'$. As a result, the engine can be kept from stalling while control is being performed to rectify understeer. Similarly, when the state of the engine falls in the second region $Y$ or $Y'$ shown in Figs. **12** and **13** where driving is not possible, the gear ratio of the CVT is shifted up to reduce the engine speed so to avoid the second region $Y$ or $Y'$. As a result, rapid deterioration of the catalytic converter can be avoided.

The following describes the control that is performed when the posture control to rectify understeer is complete, and in particular, the control that restores the gear ratio when control has been performed over the gear ratio to reduce the vehicle driving torque or avoid one of the regions where driving is not possible.

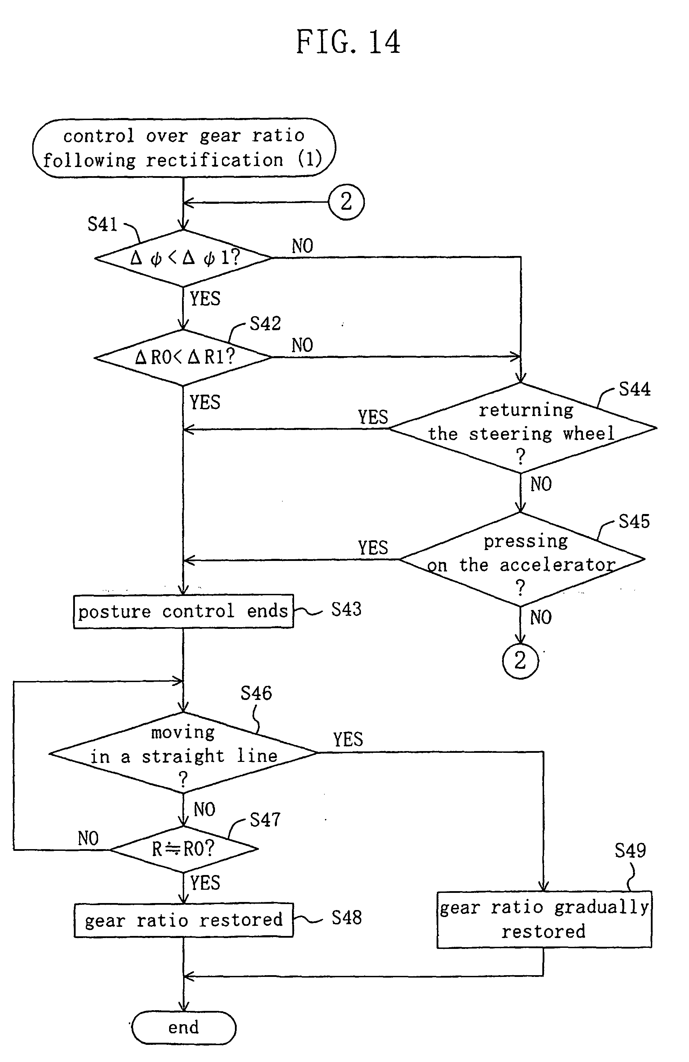

This control is performed in accordance with the flowchart shown in Fig. **14**. First, step **S41** judges whether the deviation $\Delta\phi$ of the actual yaw rate $\phi$ from the target yaw rate $\phi_0$ is below a predetermined value $\Delta\phi_1$. When this is the case, step **S42** next judges whether the target change $\Delta R$ of the gear ratio $R$ for rectifying the understeer is below a predetermined value $\Delta R_1$.

When the target change $\Delta R$ is below the predeter-

mined value $\Delta R_1$, which is to say, when the understeer has been almost rectified, in step **S43** the posture control for rectifying understeer shown by the flowchart in Fig. **5** ends.

When the deviation $\Delta\phi$ is not below the predetermined value $\Delta\phi_1$, or when the target change $\Delta R$ of the gear ratio $R$ is not below the predetermined value $\Delta R_1$, the detection of an operation of the steering wheel by the driver in step **S44** or the detection of pressure applied to the accelerator pedal by the driver in step **S45** results in the posture control ending in step **S43** in the same way as when the understeer has been rectified as described above.

After this, if the gear ratio of the CVT was changed during the posture control from a gear ratio given by gearing characteristics that are set in advance in a map (shown in Fig. **3**) that associates gear ratios with the current state of the vehicle, control is performed to restore the gear ratio to a gear ratio that is given by the gearing characteristics.

In more detail, step **S46** first judges whether the vehicle is moving in a straight line. If the vehicle is still turning, then step **S47** judges whether the actual gear ratio $R$ of the CVT is within an allowed range of the gear ratio $R_0$ that is given by the gearing characteristics. If the actual gear ratio $R$ of the CVT is approximately equal to the gear ratio $R_0$ and so falls within the allowed range, then step **S48** performs control to return the gear ratio $R$ to the gear ratio $R_0$ given by the gearing characteristics. By doing so, once posture control ends, the gear ratio can be restored to a gear ratio given by the gearing characteristics without having to make a large change in the gear ratio of the CVT. This means that the vehicle is smoothly returned to the normal operating state.

On the other hand, when the vehicle is running in a straight line when the posture control ends, or when vehicle ends up running in a straight line while the system is waiting for the actual gear ratio $R$ to fall within an allowed range of the gear ratio $R_0$, the control unit **10** executes step **S49** following step **S46**, and immediately restores the gear ratio to the gear ratio $R_0$ given by the gearing characteristics without waiting for the actual gear ratio $R$ to fall within the allowed range of the gear ratio $R_0$.

By doing so, the vehicle can be kept from unnecessarily continuing to run with a gear ratio that differs from the gear ratio given by the gearing characteristics once the vehicle is moving in a straight line, which is to say, when there is no risk of the running of the vehicle being destabilized by quite a large change in the gear ratio or of a further occurrence of understeer. By doing so, the vehicle can be quickly restored to normal operation where the gear ratio is selected based on the state of the vehicle according to the gearing characteristics.

When operating in this way, there can be cases where there is quite a large change in the gear ratio, so that the restoring operation in step **S49** restores the gear ratio gradually as the vehicle straightens up. This makes the gear change less noticeable to the passengers of the vehicle.

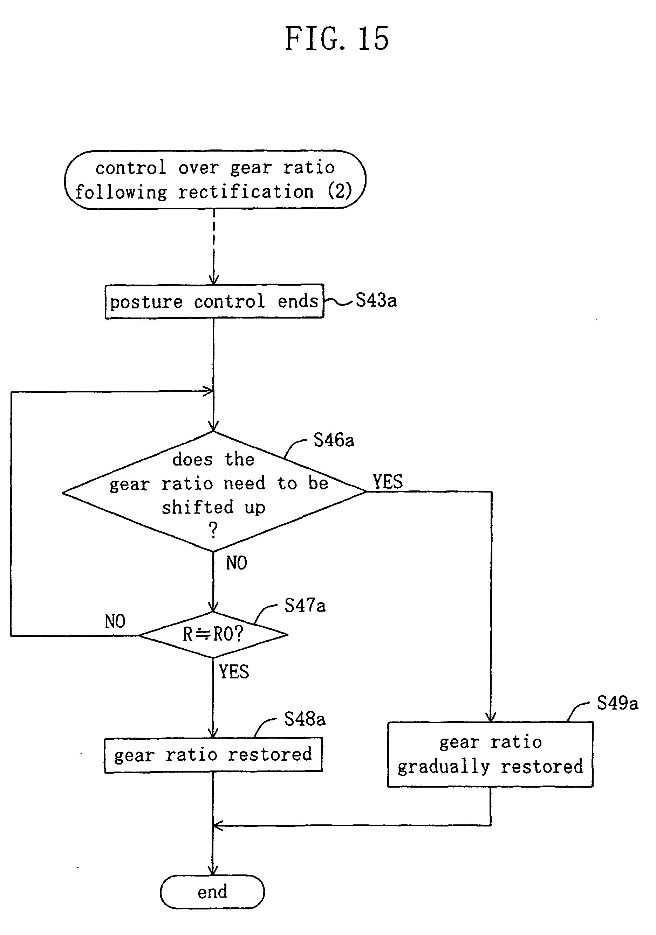

It should be noted that Figs. **15** to **17** show other examples of the control that can be performed to restore the gear ratio to the gear ratio given by the gearing characteristics. These are described one at a time below. Note that the omitted parts of these flowcharts are the same as steps **S41**, **S42**, **S45** and **S46** in Fig. **14**.

First, the second control example shown by the flowchart in Fig. **15** is explained. When posture control in step **S43a** ends due to the rectification of understeer, or the driver operating the steering wheel or accelerator pedal, the procedure advances to step **S46a**, which judges whether the gear ratio $R$ of the CVT needs to be shifted up to restore it to the gear ratio $R_0$ given by the gearing characteristics.

When the gear ratio $R$ does not need to be shifted up, the control unit **10** next executes **S47a,** which judges whether the actual gear ratio $R$ of the CVT is within an allowed range of the gear ratio $R_0$ that is given by the gearing characteristics. If so, then step **S48a** restores the gear ratio $R$ to the gear ratio $R_0$ given by the gearing characteristics. By doing so, once posture control ends, the gear ratio can be restored to a gear ratio given by the gearing characteristics without having to make a large change in the gear ratio of the CVT. This means that the vehicle is smoothly returned to the normal operating state.

On the other hand, when the gear ratio $R$ needs to be shifted up to restore it to the gear ratio $R_0$ given by the gearing characteristics, the control unit **10** does not wait for the actual gear ratio $R$ to fall within the allowed range of the gear ratio $R_0$ given by the gearing characteristics and in step **S49a** immediately restores the gear ratio $R$ to the gear ratio $R_0$ given by the gearing characteristics.

By doing so, the vehicle can be kept from continuing to run with a gear ratio that differs from the gear ratio given by the gearing characteristics due to the shifting up of the gear ratio being unnecessarily delayed. This is because when shifting up, there is no risk of the running of the vehicle being destabilized by quite a large change in the gear ratio or of a further occurrence of understeer. By operating in this way, the vehicle can be quickly restored to normal operation where the gear ratio is selected based on the state of the vehicle according to the gearing characteristics. In this case the restoring of the gear ratio in step **S49a** is performed gradually, in the same way as in the control example shown in Fig. **14**.

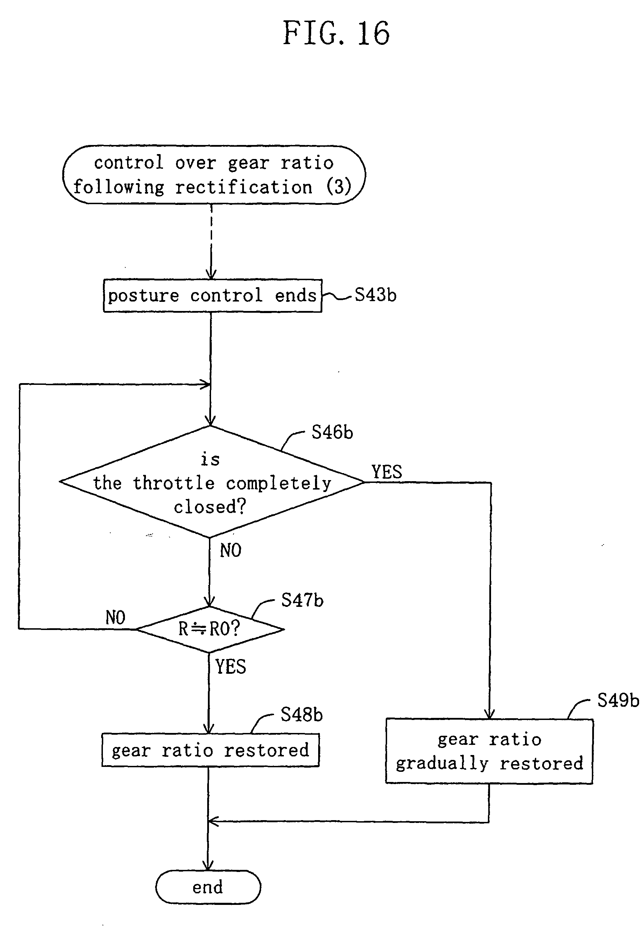

Next, the third control example shown by the flowchart in Fig. **16** is explained. In the same way as with the other control examples, when posture control in step **S43b** ends due to the rectification of understeer, the procedure advances to step **S46b**, which judges whether the throttle opening of the engine at that point is completely closed or whether the throttle opening has become completely closed following the end of posture control.

When the throttle opening is not completely closed, the procedure proceeds to step **S47b**, which judges whether the actual gear ratio $R$ of the CVT is within an allowed range of the gear ratio $R_0$ that is given by the gearing characteristics. If so, then step **S48b** restores the gear ratio $R$ to the gear ratio $R_0$ given by the gearing characteristics. By doing so, once posture control ends, the gear ratio can be restored to a gear ratio given by the gearing characteristics without having to make a large change in the gear ratio of the CVT. This means that the vehicle is smoothly returned to the normal operating state.

On the other hand, when the throttle opening is completely closed when the posture control ends or the throttle opening becomes completely closed while the system is waiting for the actual gear ratio $R$ to fall within an allowed range of the gear ratio $R_0$ that is given by the gearing characteristics, step **S49b** immediately restores the gear ratio to the gear ratio $R_0$ given by the gearing characteristics without waiting for the actual gear ratio $R$ to fall within the allowed range.

By doing so, the vehicle can be kept from continuing to run with a gear ratio that differs from the gear ratio given by the gearing characteristics due to the restoring of gear ratio being unnecessarily delayed. This is because when the throttle opening is completely closed, there is no risk of the running of the vehicle being destabilized by quite a large change in the gear ratio or of a further occurrence of understeer. By operating in this way, the vehicle can be quickly restored to normal operation where the gear ratio is selected based on the state of the vehicle according to the gearing characteristics. In this case, the restoring of the gear ratio in step **S49b** is performed gradually, in the same way as in the other control examples.

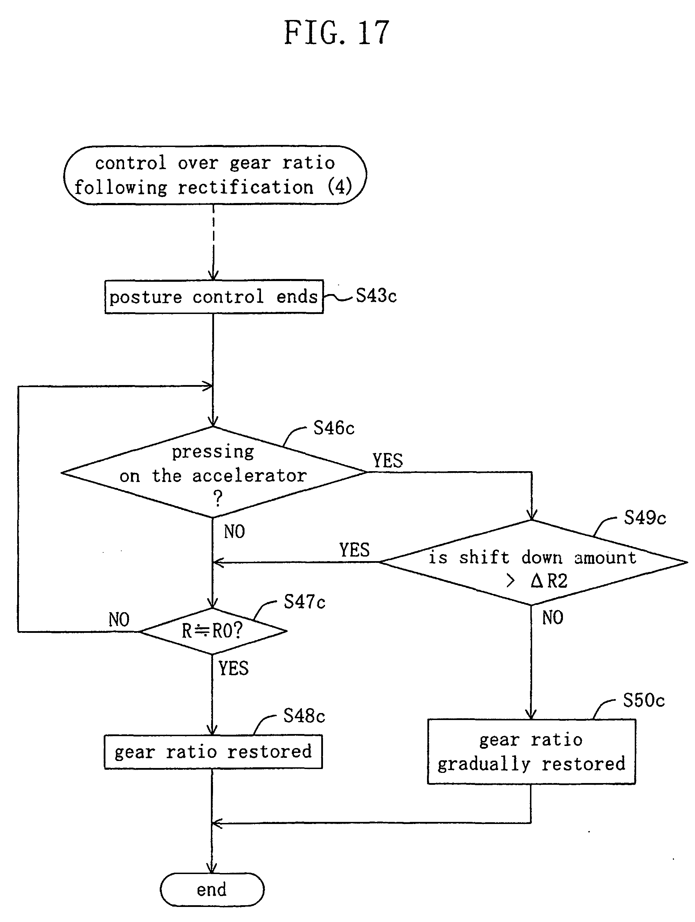

Next, the fourth control example shown by the flowchart in Fig. **17** is explained. In the same way as with the other control examples, when posture control in step **S43c** ends due to the rectification of understeer, the procedure advances to step **S46c** where the control unit **10** judges whether the driver is pressing the accelerator pedal.

When the driver is not pressing the accelerator pedal, the procedure advances to step **S47c**, which judges whether the actual gear ratio $R$ of the CVT is within an allowed range of the gear ratio $R_0$ that is given by the gearing characteristics. If so, step **S48c** restores the gear ratio $R$ to the gear ratio $R_0$ given by the gearing characteristics. By doing so, as with the other control examples, after posture control ends, the gear ratio can be restored to a gear ratio given by the gearing characteristics without having to make a large change in the gear ratio of the CVT. This means that the vehicle is smoothly returned to the normal operating state.

On the other hand, if after the posture control ends, the user presses the accelerator pedal while the system is waiting for the actual gear ratio $R$ to fall within an allowed range of the gear ratio $R_0$ that is given by the gearing characteristics, the gear ratio is immediately restored to the gear ratio $R_0$ given by the gearing characteristics without waiting for the actual gear ratio $R$ to fall within the allowed range. In this case, the control unit **10** first executes step **S49c** where it is judged whether the restoring operation shifts down the gear ratio in excess of a predetermined value $\Delta R_2$.

When the change in the gear ratio $R$ is a shift down that exceeds the predetermined value $\Delta R_2$, restoring the gear ratio to the gear ratio $R_0$ given by the gearing characteristics is cancelled, and in step **S47c**, the system waits for the actual gear ratio $R$ to fall within the allowed range of the gear ratio $R_0$. This is because if the gear ratio is shifted down significantly when the driver has pressed the accelerator pedal, there is the risk of excessive driving torque causing understeer to occur once again.

On the other hand, when the operation restoring the gear ratio $R$ to the gear ratio $R_0$ given by the gearing characteristics does not result in the gear ratio being shifted down in excess of a predetermined value $\Delta R_2$, in step **S50c** the gear ratio $R$ is restored to the gear ratio $R_0$ given by the gearing characteristics without waiting for the actual gear ratio $R$ to fall within the allowed range of the gear ratio $R_0$ given by the gearing characteristics.

As a result, when the driver tries to accelerate, this is given priority, so that the vehicle is operated with a suitable gear ratio for the state of the vehicle as given by the gearing characteristics, thereby making the vehicle accelerate as demanded. In this case, the restoring of the gear ratio in step **S50c** is performed gradually, in the same way as in the other control examples.

**Claims**

1. An overall control system for a vehicle that includes

   (i) a posture control apparatus that controls vehicle posture in a yaw direction during cornering by controlling output of the engine (81) and braking forces applied to right and left wheels (83),

   (ii) a continuously variable transmission (80) whose gear ratio can be steplessly changed, the overall control system comprising:

   (iii) an understeer detecting means for detecting understeer while the vehicle is cornering,

   (iv) an engine output reducing means for reducing the engine output by performing control to reduce a number of cylinders of the engine (81) in which combustion is performed and/or performing control to retard an ignition timing,

(v) a gear ratio changing means (39, 40, 55) for changing the gear ratio of the continuously variable transmission (80), and

(vi) a power train control means for controlling, when the understeer detecting means has detected the understeer, a reduction in the engine output by the engine output reduction means and/or a change in the gear ratio of the continuously variable transmission (80) by the gear ratio changing means (39, 40, 55) to reduce the vehicle driving torque,

**characterized in that**
the power train control means, when the understeer detecting means has detected the understeer, reduces the vehicle driving torque to a target driving torque, whereby, when the vehicle driving torque cannot be reduced to the target driving torque by performing control to make a reduction in the number of cylinders in which combustion is performed, control is performed in addition over the gear ratio of the continuously variable transmission (80) to reach the target driving torque,
whereby the power train control means reduces the vehicle driving torque by reducing the number of cylinders in which combustion is performed and changing the gear ratio of the continuously variable transmission (80) and, if the target value of the vehicle driving torque is still not reached, then further reduces the number of cylinders in which combustion is performed.

## Patentansprüche

1. Gesamtsteuerungssystem für ein Fahrzeug, welches umfasst:

   (i) eine Fahrdynamikregelung, welche die Fahrzeuglage in einer Gierrichtung während Kurvenfahrt durch Steuern der Ausgangsleistung des Motors (81) und der auf das rechte und linke Rad (83) ausgeübten Bremskräfte steuert,

   (ii) ein stufenloses Automatikgetriebe (80), dessen Übersetzung stufenlos geändert werden kann,
   wobei das Gesamtsteuerungssystem umfasst:

   (iii) ein Untersteuerungsfeststellmittel für das Feststellen einer Untersteuerung während der Kurvenfahrt des Fahrzeugs,

   (iv) eine Motorausgangsleistungsreduziervorrichtung für das Reduzieren der Motorausgangsleistung durch Vornehmen einer Steuerung, um eine Anzahl von Zylindern des Motors (81) zu reduzieren, in welchen Verbrennung erfolgt, und/oder durch Vornehmen einer Steuerung, um eine Zündeinstellung zu verzögern,

   (v) ein Übersetzungsänderungsmittel (39, 40, 55) für das Ändern der Übersetzung des stufenlosen Automatikgetriebes (80) und

   (vi) ein Motor-/Antriebsstrangsteuerungsmittel für das Steuern einer Reduzierung der Motorausgangsleistung durch die Motorausgangsleistungsreduzierungsvorrichtung und/oder einer Änderung der Übersetzung des stufenlosen Automatikgetriebes (80) durch das Übersetzungsänderungsmittel (39, 40, 55), um das Antriebsmoment des Fahrzeugs zu reduzieren, wenn das Untersteuerungsfeststellmittel die Untersteuerung festgestellt hat,

**dadurch gekennzeichnet, dass**
das Motor-/Antriebsstrangsteuerungsmittel das Antriebsmoment des Fahrzeugs auf ein Sollantriebsmoment senkt, wenn das Untersteuerungsfeststellmittel die Untersteuerung festgestellt hat, wodurch die Steuerung zusätzlich über der Übersetzung des stufenlosen Automatikgetriebes (80) ausgeführt wird, um das Sollantriebsmoment zu erreichen, wenn das Antriebsmoment des Fahrzeugs durch Ausführen der Steuerung zur Reduzierung der Anzahl an Zylindern, in welchen Verbrennung erfolgt, nicht auf das Sollantriebsmoment gesenkt werden kann,
wodurch das Motor-/Antriebsstrangsteuermittel das Antriebsmoment des Fahrzeugs durch Reduzieren der Anzahl an Zylindern, in welchen Verbrennung erfolgt, und durch Ändern der Übersetzung des stufenlosen Automatikgetriebes (80) senkt und, wenn der Sollwert des Antriebsmoments des Fahrzeugs immer noch nicht erreicht ist, dann die Anzahl an Zylinder, in denen Verbrennung erfolgt, weiter reduziert.

## Revendications

1. Système global de commande pour un véhicule qui comprend

   (i) un appareil de commande de posture qui commande la posture du véhicule dans une direction d'embardée pendant un virage en commandant la sortie du moteur (81) et des forces de freinage appliquées aux roues droites et gauches (83),

   (ii) une transmission variable en continu (80) dont le rapport de transmission peut être changé d'une manière continue,

le système global de commande comprenant:

(iii) un moyen de détection de sous-virage pour détecter un sous-virage pendant que le véhicule effectue un virage,

(iv) un moyen de réduction de la sortie du moteur pour réduire la sortie du moteur en exécutant une commande pour réduire un nombre de cylindres du moteur (81) dans lesquels une combustion est exécutée et/ou en exécutant une commande pour retarder un instant d'allumage,

(v) un moyen de changement de rapport de transmission (39, 40, 55) pour changer le rapport de transmission de la transmission variable en continu (80), et

(vi) un moyen de commande du train de puissance pour commander, lorsque le moyen de détection de sous-virage a détecté un sous-virage, une réduction de la sortie du moteur par le moyen de réduction de la sortie du moteur et/ou un changement du rapport de transmission de la transmission variable en continu (80) par le moyen de changement de rapport de transmission (39, 40, 55) afin de réduire le couple d'entraînement du véhicule,

**caractérisé en ce que**
le moyen de commande du train de puissance, lorsque le moyen de détection de sous-virage a détecté le sous-virage, réduit le couple d'entraînement du véhicule à un couple d'entraînement cible par quoi, lorsque le couple d'entraînement du véhicule ne peut pas être réduit au couple d'entraînement cible en exécutant la commande pour réaliser une réduction du nombre de cylindres dans lesquels la combustion est exécutée, une commande est exécutée en plus du rapport de transmission de la transmission variable en continu (80) pour atteindre le couple d'entraînement cible,
par quoi le moyen de commande du train de puissance réduit le couple d'entraînement du véhicule en réduisant le nombre de cylindres dans lesquels la combustion est exécutée et en changeant le rapport de transmission de la transmission variable en continu (80) et, si la valeur cible du couple d'entraînement du véhicule n'est toujours pas atteinte, réduit alors encore le nombre de cylindres dans lesquels la combustion est exécutée.

FIG. 1

# FIG. 2

EP 1 195 304 B1

# FIG. 3

gear ratio

high (shift down)

low (shift up)

8/8
7/8
6/8
5/8
4/8
3/8
2/8
1/8
0/8

target engine speed

vehicle speed →

0/8~8/8 : throttle opening

# FIG. 4

```
                    ( start )
                       │
                       ▼
         ┌─────────────────────────┐
         │ various signals inputted │─── S1
         └─────────────────────────┘
                       │
                       ▼
         ┌─────────────────────────┐
         │ φ(θ), φ(G) calculation  │─── S2
         └─────────────────────────┘
                       │
                       ▼          S3
                    ╱──────────────╲
                   ╱  |φ(θ)| < |φ(G)|  ╲        NO          ┌──────────────────────────────────┐  S6
                  ╱         ?           ╲──────────────────│ target value set                  │
                   ╲                   ╱                    │ φ0=φ(G)+k × [φ(θ) − φ(G)]         │
                    ╲──────────────╱                        └──────────────────────────────────┘
                       │ YES                                          │
                       ▼                                              │
      S4  ┌─────────────────────┐                                     │
          │ target value set    │                                     │
          │    φ0 =φ(θ)          │                                     │
          └─────────────────────┘                                     │
                       │◄─────────────────────────────────────────────┘
                       ▼
      S5  ┌─────────────────────┐
          │ deviation calculated │
          │  Δφ = |φ−φ0|        │
          └─────────────────────┘
                       │
                       ▼
      S7  ┌─────────────────────┐
          │ thresholds Δφos     │
          │  and Δφus set       │
          └─────────────────────┘
                       │
                       ▼              S8
         YES        ╱──────────────╲
       ┌──────────╱ φ>φ0 & Δφ >Δφos ╲
       │          ╲        ?         ╱
       │           ╲──────────────╱
       │                  │ NO
       │                  ▼            S10
       │               ╱──────────────╲
       │              ╱   φ<φ0 &        ╲      YES
       │             ╱  Δφ >Δφus         ╲──────────────┐
       │              ╲     ?            ╱               │
       │               ╲──────────────╱                 │
  S9   │                      │ NO                       │            S11
  ┌──────────┐                │                    ┌──────────────────────────────┐
  │ oversteer │               │                    │ understeer rectifying control │
  │ rectifying│               │                    └──────────────────────────────┘
  │ control   │               │                          │
  └──────────┘                │                          │
       │                      │◄─────────────────────────┘
       └──────────────────────┤
                              ▼
                          ( return )
```

EP 1 195 304 B1

## FIG. 5

```
         ┌─────────────────────┐
         │     understeer      │
         │  rectifying control │
         └──────────┬──────────┘
                    │            S21
                    ▼                          YES
            ◇ Δφ > Δφ0 ? ◇ ──────────────────────────────────┐
                    │ NO                                       │
                    ▼            S24                           │
              ◇   is           ◇         YES                   │
              ◇ the driver     ◇ ───────────────────────┐     │
              ◇ braking ?      ◇                         │     │
                    │ NO                                 ▼     ▼
                    ▼                              ┌──────────────────┐
          ┌───────────────────┐  S25              ║  brake control   ║── S22
          │  ΔT0 calculation  │                   └─────────┬────────┘
          └─────────┬─────────┘                             │
                    ▼                                        ▼
          ┌───────────────────┐  S26          S23   ┌──────────────────┐
          │   T0 = T - ΔT0     │                ─── │ suppress gear    │
          └─────────┬─────────┘                     │ ratio changing   │
                    ▼                               │ speed            │
          ┌───────────────────┐  S27               └─────────┬────────┘
          │  ΔR0 calculation  │                               │
          └─────────┬─────────┘                               ▼
                    ▼                                        ( 1 )
          ┌───────────────────┐  S28
          │  ΔRa calculation  │
          └─────────┬─────────┘
                    │            S29
                    ▼                    NO
            ◇ ΔR0 < ΔRa ? ◇ ──────────────────┐
                    │ YES                       ▼          S31
                    │                     ◇    can          ◇    NO              S33
                    │                     ◇ target torque   ◇ ──────────┐
                    │                     ◇ be reached ?    ◇            ▼
              S30   │                           │ YES                ┌──────────────────┐
                    ▼                           │                    │ number of        │
          ┌───────────────────┐          S32    ▼                    │ cylinders        │
          │  control over     │          ┌──────────────┐           │ reduced, retard  │
          │  the gear ratio   │          │ retard       │           │ control, and     │
          └─────────┬─────────┘          │ control      │           │ control over     │
                    │                    └──────┬───────┘           │ gear ratio       │
      ( 1 )─────────┤                           │                   └────────┬─────────┘
                    ▼                           │                            │
            ┌──────────────┐                    │                            │
            │    return    │◄───────────────────┴────────────────────────────┘
            └──────────────┘
```

19

# FIG. 6

first torque reduction (ΔT1)

0

0    deviation (ΔΨ) ⟶

# FIG. 7

second torque reduction (ΔT2)

0   rate of change of deviation (Δφ) ⟶

FIG. 8

# FIG. 9

## FIG. 10

first correction coefficient (K1) vs steering angle

when shifting up

when shifting down

## FIG. 11

second correction coefficient (K2) vs throttle opening

when shifting up

when shifting down

EP 1 195 304 B1

# FIG. 12

[when the engine is warm]

engine output torque →

engine speed →

-A-

retard

one less cylinder used

-B-    B

retard

-E-    b    P2    two less cylinders used

c

-C-

retard    -Y-

D  -F-

three less cylinders used

-G-

-X-

# FIG. 13

[when the engine is cold]

engine output torque

−A′−

retard

B′

−E′−

one less cylinder used

−X′−

C′

two less cylinders used

−F′−

−Y′−

D′

three less cylinders used

−G′−

engine speed →

**EP 1 195 304 B1**

## FIG. 14

control over gear ratio
following rectification (1)

②

S41  $\Delta \phi < \Delta \phi 1?$  — NO

YES

S42  $\Delta R0 < \Delta R1?$  — NO

YES

S44  returning
the steering wheel
?  — YES

NO

S45  pressing
on the accelerator
?  — YES

NO

②

posture control ends — S43

S46  moving
in a straight line
?  — YES

NO

S47  $R \fallingdotseq R0?$  — NO

YES

gear ratio restored — S48

S49  gear ratio gradually
restored

end

26

# FIG. 15

```
        ┌─────────────────────────┐
        │  control over gear ratio │
        │ following rectification (2)│
        └─────────────────────────┘
                     ┊
                     ▼
        ┌─────────────────────────┐
        │   posture control ends  │──S43a
        └─────────────────────────┘
                     │
    ┌────────────────┤
    │                ▼
    │            ╱─────────╲  S46a
    │          ╱    does the   ╲
    │        ╱  gear ratio need to be ╲  YES
    │        ╲      shifted up      ╱──────────┐
    │          ╲        ?        ╱             │
    │            ╲─────────╱                   │
    │                │ NO                      │
    │                ▼    S47a                 │
    │  NO        ╱────────╲                    │
    └──────────╲  R≒R0?  ╱                     │
                ╲────────╱                     │
                    │ YES                      │
                    ▼                          ▼
        ┌───────────────────┐    ┌─────────────────────┐ S49a
        │ gear ratio restored│S48a│     gear ratio      │
        └───────────────────┘    │ gradually restored  │
                    │            └─────────────────────┘
                    │                      │
                    ◄──────────────────────┘
                    ▼
               ┌────────┐
               │  end   │
               └────────┘
```

# FIG. 16

```
        ╭─────────────────────────╮
        │  control over gear ratio │
        │ following rectification (3)│
        ╰─────────────────────────╯
                     ┊
                     ▼
        ┌─────────────────────────┐
        │   posture control ends  │───S43b
        └─────────────────────────┘
                     │
                     ▼
              ◇───────────────◇           S46b
             ╱                 ╲
            ╱        is         ╲      YES
           ◇ the throttle completely ◇──────────┐
            ╲       closed?       ╱             │
             ╲                   ╱              │
              ◇─────────────────◇               │
                     │ NO                       │
                     ▼                          │
         NO    ◇──────────◇  S47b               │
       ┌───────│  R≒R0?   │                      │
       │       ◇──────────◇                      │
       │            │ YES                        │
       │            ▼                            ▼
       │   ┌──────────────────┐   S48b  ┌──────────────────────┐  S49b
       │   │ gear ratio restored│       │     gear ratio       │
       │   └──────────────────┘         │ gradually restored   │
       │            │                   └──────────────────────┘
       │            ▼                            │
       │       ╭─────────╮◄───────────────────────┘
       │       │   end   │
       │       ╰─────────╯
       └──────────┘
```

# FIG. 17

control over gear ratio
following rectification (4)

posture control ends — S43c

pressing
on the accelerator
? — S46c

YES

NO

is shift down amount
$> \Delta R2$ — S49c

YES

NO

$R \doteqdot R0?$ — S47c

NO

YES

gear ratio restored — S48c

gear ratio
gradually restored — S50c

end

29